(19) Europäisches Patentamt
European Patent Office
Office européen des brevets

(11) **EP 1 177 243 B1**

(12) **EUROPÄISCHE PATENTSCHRIFT**

(45) Veröffentlichungstag und Bekanntmachung des Hinweises auf die Patenterteilung:
**02.04.2003 Patentblatt 2003/14**

(51) Int Cl.[7]: **C08J 3/14**, C08F 2/22, C01B 33/152, B01J 19/00

(21) Anmeldenummer: **00931070.7**

(22) Anmeldetag: **25.04.2000**

(86) Internationale Anmeldenummer:
**PCT/EP00/03677**

(87) Internationale Veröffentlichungsnummer:
**WO 00/068300 (16.11.2000 Gazette 2000/46)**

(54) **VERFAHREN ZUR HERSTELLUNG VON PERLPOLYMERISATEN**

METHOD FOR PRODUCING BEAD POLYMERS

PROCEDE DE FABRICATION DE POLYMERES EN PERLES

(84) Benannte Vertragsstaaten:
**AT BE CH CY DE DK ES FI FR GB GR IE IT LI LU MC NL PT SE**

(30) Priorität: **06.05.1999 DE 19920794**

(43) Veröffentlichungstag der Anmeldung:
**06.02.2002 Patentblatt 2002/06**

(73) Patentinhaber: **MERCK PATENT GmbH 64271 Darmstadt (DE)**

(72) Erfinder:
 • **EISENBEISS, Friedhelm**
   **D-64331 Weiterstadt (DE)**
 • **KINKEL, Joachim**
   **D-55452 Guldental (DE)**
 • **MÜLLER, Hans-Daniel-Jakob**
   **D-64839 Münster (DE)**

(56) Entgegenhaltungen:
**EP-A- 0 542 051        WO-A-99/19386**
**US-A- 5 244 734        US-A- 5 886 112**
**US-A- 5 902 834**

 • **DATABASE WPI Week 9326 Derwent Publications Ltd., London, GB; AN 1993-208895 XP002147178 & JP 05 132567 A (DAINIPPON INK & CHEM IND)**
 • **PATENT ABSTRACTS OF JAPAN vol. 013, no. 556 (C-664), 11. Dezember 1989 (1989-12-11) & JP 01 230420 A (NIPPON SHOKUBAI KAGAKU KOGYO CO LTD), 13. September 1989 (1989-09-13)**
 • **PATENT ABSTRACTS OF JAPAN vol. 015, no. 072 (C-0808), 20. Februar 1991 (1991-02-20) & JP 02 296711 A (SHIN ETSU CHEM CO LTD), 7. Dezember 1990 (1990-12-07)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Darstellung von Perlpolymerisaten.

Perlpolymerisate werden beispielsweise als Ionentauscher, Adsorberharze, Chromatographieträger, Katalyseträger, polymere Reagenzien, Imprinting-Polymere oder als Trägermaterialien für kombinatorische Chemie, Peptidoder Oligonukleotidsynthese sowie für kosmetische Anwendungen eingesetzt.

Die Herstellung solcher Perlpolymerisate, d.h. sphärischer organischer oder anorganischer Partikel, wie z.B. kugelförmiger Kieselgele, ist relativ aufwendig. Perlpolymerisate werden typischerweise in Rührkesseln unter Zusatz von Emulgatoren hergestellt. Die Monomere werden dabei durch turbulente Druckschwankungen oder viskose Scherkräfte in kleine Tropfen zerteilt, die unter dem Einfluß der Grenzflächenspannung Kugelform annehmen.

Wird der Reaktionsansatz vergrößert, so wird es zunehmend schwieriger, Temperaturführung und Teilchenerzeugung bei mechanischem Dispergieren zu kontrollieren. Die entstehenden Teilchen werden bezüglich ihrer Korngrößenverteilung uneinheitlich und ihre Netzwerkstruktur wird inhomogen. Kleine Teilchen unter 30 µm können aufgrund der hohen Dispersionsenergien kaum noch hergestellt werden. Alternative Methoden, in denen kleine Teilchen durch Aufwachsen aus Nanopartikeln erzeugt werden, sind meist zeitintensiv und teuer.

JP A 05-132567 offenbart ein Verfahren zur Herstellung von PolyurethanHarz Dispersionen, wobei man eine voremulgierte Mischung hochpolymerer Harzpartikel in Wasser in einem Mikrofluidizer unter hohem Druck auf eine Wand aufprallen läßt. Die hochpolymeren Partikel werden dabei zu kleineren Partikeln zerschlagen.

EP 0 542 051 offenbart ein Verfahren zur Herstellung sphärischer Partikel mit einem Durchmesser zwischen 1 und 100 µm durch Kontrolle des Trübungspunktes von Polyvinylalkohol und anderer wasserlöslicher Polymere.

WO 99/19386 beschreibt ein Verfahren zur Herstellung monodisperser Polyurethan-Partikel, wobei eine Präpolymerlösung durch eine Membran mit gleichmäßigem Porendurchmesser extrudiert wird.

US 5,244,734 offenbart ein Verfahren zur Herstellung monodisperser Cellulose-Partikel.

Eine weitaus vorteilhaftere Methode, besonders zur Produktion in industriellem Maßstab, ist eine kontinuierliche Reaktionsführung. Auf diese Weise sollten auch große Mengen mit einheitlicher Produktqualität erzeugt werden können. Auf dem Gebiet der Perlpolymerisation gibt es zahlreiche Ansätze für kontinuierliche Reaktoren. Die Mehrzahl der Ansätze nutzt einen kontinuierlich betriebenen Rührkesselreaktor, wie er beispielsweise in unterschiedlichen Ausführungen in der Enzyclopedia of Polymer Science and Engeneering, 1986, Band 6, Seiten 11-18 beschrieben ist. In DE 196 34 450 werden verschiedene weitere Ansätze beschrieben. Eine Möglichkeit bietet Einsatz von rohrförmigen Rührreaktoren, die durch die Ausbildung von Taylor-Ringen eine verbesserte Durchmischung senkrecht zur Strömungsrichtung gewährleisten. Für stark exotherme Reaktionen können leere Rohrreaktoren eingesetzt werden.

Allerdings gibt es noch kein großtechnisch angewendetes Verfahren dieser Art. Grund dafür sind offenbar Schwierigkeiten bei der Einstellung der gewünschten Perlgrößenverteilung, die Bildung von Koagulat und Anbackungen in Toträumen und die Notwendigkeit, eine möglichst schnelle und effektive Durchmischung zu erzielen.

Durch eine Vielzahl von Maßnahmen, wie Optimierung der Reaktordimension und Einsatz von Reaktoren mit gekrümmten bis helikal gewundenen Rohren oder Rohrreaktoren mit mehreren aufeinanderfolgenden Krümmungen mit alternierender Krümmungsrichtung, wie beispielsweise in DE 196 34 450 ausgeführt, wurde versucht, die beschriebenen Nachteile zu beheben. Bisher gelang es jedoch nicht, ein allgemein anwendbares kontinuierliches Verfahren zur Perlpolymerisation zu entwickeln. Die ausgeführten Versuche zeigen lediglich eine Verbesserung der Bodenstein-Zahl, die ein Maß für die Breite und Symmetrie der Verweilzeitverteilung ist. Die Probleme der Koagulation, Teilchengrößenverteilung und eine erhöhte Raum-Zeit-Ausbeute sind nicht gelöst. Dies gilt insbesondere für die Herstellung anorganischer Perlpolymerisate.

Aufgabe der vorliegenden Erfindung ist es daher, ein Verfahren bereitzustellen, das es ermöglicht, Perlpolymerisate in kontinuierlicher Arbeitsweise, mit gezielt einstellbarem Kombereich, verbesserter Ausbeute und einheitlicherer Qualität darzustellen.

Es wurde gefunden, daß der Einsatz von neuartigen Hochleistungs-Mikromischern in Verbindung mit einem einfachen Auffanggefäß, in welchem die Verfestigungs- und/oder Polymerisationsreaktion durchgeführt wird, die kontinuierliche Perlpolymerisation ermöglicht und zugleich stark verbessert.

Das erfindungsgemäße Verfahren beruht auf der Zusammenführung von flüssigen Strömen geeigneter, üblicherweise nicht mischbarer Komponentenlösungen in einem Mikromischer, so daß kugelförmige Teilchen in kontinuierlicher Arbeitsweise bei extrem verbesserter Volumenausbeute, großer Teilchenausbeute mit gezielt einstellbarem Kombereich, vereinfachter Temperaturführung und reduziertem Chemikalienverbrauch entstehen.

Gegenstand der Erfindung ist daher ein Verfahren zur Darstellung von Perlpolymerisaten, wobei flüssige Ströme nicht oder gering mischbarer Komponentenlösungen mit einer optionalen Zuführung weiterer Komponentenströme in einem Mikromischer gemischt und direkt oder anschließend zur Reaktion gebracht werden.

Bevorzugte Ausführungsform des erfindungsgemäßen Verfahrens ist außerdem der Anschluß einer oder mehrerer Zusatzeinrichtungen an einen ersten Mikromischer.

Bevorzugte Ausführungsform der Erfindung ist zudem der Einsatz von Komponentenlösungen ohne Zusatz von Emulgatoren und Schutzkolloiden.

In Abbildung 1 ist der Aufbau eines erfindungsgemäß eingesetzten Mikromischers dargestellt.

Abbildung 2 zeigt eine Reaktionsanlage zur erfindungsgemäßen Herstellung von heterogen quervernetztem Styrol/Divinylbenzol.

Nähere Angaben finden sich in Beispiel 1.

Abbildung 3 zeigt eine Reaktionsanlage zur erfindungsgemäßen Herstellung von porösem kugelförmigem Kieselgel.

Nähere Angaben finden sich in Beispiel 2.

In Abbildung 4, 5 und 6 wird die Qualität von Teilchen verglichen, die nach dem herkömmlichen Rührkesselverfahren bzw. nach dem erfindungsgemäßen Verfahren hergestellt wurden.

Zur Bestimmung der Korngrößen bzw. Teilchengrößenverteilung gibt es verschiedene Verfahren, mit denen entweder eine Anzahlverteilung oder eine Massenverteilung bestimmt werden kann. Dies sind beispielsweise unterschiedliche Arten der Siebung (Trockensiebung, Nassiebung, Mikrosiebung), Sedimentationen (Sedimentation im Schwerefeld, Sedimentation im Zentrifugalfeld), Mikroskopische Untersuchungen, Messungen im Coulter Counter oder die Lichtstreuung. Im Hinblick auf Schnelligkeit, Reproduzierbarkeit und Genauigkeit ist die Messung der Lichtstreuung, die auf einen Größenbereich von 0,1 bis 1000 μm anwendbar ist, zu bevorzugen.

Zur Beurteilung einer massenbezogenen Korngrößenverteilung wird ein Qualitätsfaktor $Q_f$ wie folgt definiert:

$$Q_{f90} = (d_{95} - d_5)/d_{50}$$

Wobei:

$d_x$ die Durchgangssummenwerte für die jeweilige gemessene Korngröße bedeuten (z.B. $d_{95}$ = 20 μm bedeutet, daß 95% der Teilchen kleiner als 20 μm) und

$Q_{fx}$ der Qualitätsfaktor für x% aller Teilchen sind.

| Beispiel | Mittlere Korngröße | $d_{50}$ = 10 μm |
| --- | --- | --- |
| | | $d_{95}$ = 15 μm |
| | | $d_5$ = 5 μm |

Das ergibt $Q_{f90}$ = (15-5)/10 = 1.

Eine Komgrößenverteilung kann als eng bezeichnet werden, wenn $Q_{f90}$ < 1 ist.

Die nach herkömmlichen Methoden dargestellten Perlpolymer-Pulver weisen typischerweise Kornbänder mit $Q_{f90}$ > 1 auf. Zusätzlich entstehen bei diesen Methoden häufig Pulver, die einen hohen Feinanteil, d.h. eine große Anzahl sehr kleiner Partikel, aufweisen. Diese Feinanteile haben einen negativen Einfluß auf die Permeabilität und müssen daher durch aufwendige Sedimentations- und Siebeverfahren entfernt werden.

Eine nach Sedimentation und Siebung sehr enge Korngrößenverteilung für Kieselgel findet sich bei den Superspher® Si 100 Partikeln der Firma Merck KGaA.

$$d_5 = 3,2 \ \mu m$$

$$d_{10} = 3,3 \ \mu m$$

$$d_{50} = 4,1 \ \mu m$$

$$d_{90} = 5,3 \ \mu m$$

$$d_{95} = 5,6 \ \mu m$$

Das ergibt $Q_{f90}$ = 0,59.

Das erfindungsgemäße Verfahren dagegen liefert Pulver mit wesentlich engerer Korngrößenverteilung. Die Kornbänder weisen ohne Sedimentation oder Siebung Werte von $Q_{f90}$ < 0,7, bevorzugt von $Q_{f90}$ < 0,5 auf.

Beispielsweise wurde

$$d_5 = 14,7 \ \mu m$$

$$d_{50} = 18,0 \ \mu m$$

$$d_{95} = 22,5 \ \mu m$$

erhalten.

Das ergibt $Q_{f90}$ = 0,43.

Pulver mit derart engen Kornbändern können für die meisten Anwendungen direkt eingesetzt werden. Die Korngrößenverteilung, die bei Anwendung des erfindungsgemäßen Verfahrens entsteht, ist enger als sie nach herkömmlichen Methoden in Rührkesseln inklusive Sedimentation und Siebung entsteht. Besonders auffällig bei nach dem erfindungsgemäßen Verfahren hergestellten Pulvern ist der geringe Feinanteil. Bevorzugterweise werden die erfindungsgemäß produzierten Perlpolymerisate daher nicht klassiert. Ihre Qualität kann jedoch durch eine einmalige Sedimentation weiter verbessert werden.

Perlpolymerisate sind erfindungsgemäß homogen oder heterogen vernetzte, quellende oder nicht quellende, poröse oder unporöse, organische oder anorganische im wesentlichen sphärische Netzwerke. Perlpolymerisate, die mit dem erfindungsgemäßen Verfahren hergestellt werden, können z.B. durch radikalische, ionische (anionische und kationische) oder thermische Polymerisation beispielsweise ethylenisch ungesättigter Monomere einschließlich der lebenden Polymerisation, sowie durch Polykondensation oder Polyaddition entstehen. Es kann sich beispielsweise um Poly(meth)acrylsäurederivate, Poly(Styrol-Divinylbenzol)-Derivate, Polyester, Polyamide, Kieselgele oder gemischte Oxide handeln.

Die Polymerisation kann in homogener oder heterogener Phase unter allen zur Polymerisation führenden Bedingungen durchgeführt werden.

Die Durchführung der Polymerisationen ist dem Fachmann im Prinzip bekannt. Ein Überblick findet sich in Houben-Weyl, Band XIV, makromolekulare Stoffe, Georg Thieme Verlag, Stuttgart.

Beispielhaft sind für die Polykondensation und Polyaddition die Polyesterund Polyurethanherstellung sowie die Kieselgelherstellung angeführt. Besonders bevorzugt ist der Einsatz des erfindungsgemäßen Verfahrens für die radikalische Polymerisation und insbesondere für die Polykondensation. Hierzu gehören Lösungs-, Fällungs-, und vorzugsweise Suspensions- und Emulsionspolymerisation einschließlich Mini-, Mikro- und inversiver Emulsionspolymerisation.

Für die radikalische Polymerisation können Monomere wie beispielsweise Mono- und Diolefine mit 2 bis 6 C-Atomen, wie Ethylen, Propylen oder Butadien, monoethylenisch ungesättigte Mono- oder Dicarbonsäuren mit 3 bis 6 C-Atomen und deren Derivate, wie Acrylsäure, Methacrylsäure, Maleinsäure, Fumarsäure, Itaconsäure, deren Salze und deren Mono- oder Diester mit $C_1$-$C_{18}$ Alkanolen oder -Diolen, wie Ester der Acrylsäure oder Methacrylsäure mit Methanol, Ethanol, n-Propanol, iso-Propanol, n-Butanol, iso-Butanol, sec-Butanol, t-Butanol, Pentanol, Hexanol, 2-Ethylhexanol, Octanol, Decanol, Dodecanol oder Stearylalkohol oder deren Amide und N-Mono oder N,N-Di-$C_1$-$C_{18}$-alkylamide oder -hydroxyalkylamide, wie Acrylamid, Methacrylamid oder Acrylnitril, Methacrylnitril, die Vinylether von Glycerin, Pentaerythrit und Polysacchariden, wie Cellulose, Amylose und Stärke, sowie mono- und disubstituierte Vinylether von Alkyl- Alkylaryl- und Arylsäureestern von Cellulose und Amylose und analoger Alkyl- Alkylarylund Arylcarbamatderivaten, (Meth)acrylnitril-, N-Acryloyl- und N-(Meth)acryloyl-Derivate von optisch aktiven Aminen, Aminosäuren, Aminosäureestern und Aminosäureamiden, wie N-Acryloyl-(R)-2-Phenylethylamin, N-Methacryloyl-(S)-2-Phenylethylamin; die optisch aktiven Enantiomere der N-Acryloyl- und N-Methacryloylalkylester und Mono- und Dialkylamide der 20 natürlichen Aminosäuren mit Methyl-, Ethyl-, n-Propyl- und Isobutyl als Alkylresten, monoethylenisch ungesättigte Sulfonsäuren und/oder deren Salze, wie das Natriumsalz der Vinylsulfonsäure, Acrylamidopropansulfonsäure oder deren Alkalisalze, oder das Natriumsalz des sulfonierten Styrols, oder vinylaromatische Verbindungen, wie Styrol, $\alpha$-Methylstyrol, oder Vinyl-$C_1$-$C_{18}$-Alkylether, wie Vinylethylether, oder Vinyl-$C_1$-$C_{18}$-Alkylester, wie Vinylacetat, Vinylpropionat, oder N-Vinyllactame, wie N-Vinylpyrolidon, oder Vinylhalogenide, wie Vinylchlorid, Vinilidenchlorid, oder vinylaromatische Verbindungen, wie Vinylpyridin, $\alpha$-Phenylstyrol, sowie Gemische verschiedener Monomere eines Typs und/oder verschiedener Typen eingesetzt werden.

Als Vernetzungsmittel können neben den bereits erwähnten Mono- und Diestern einer $C_3$-$C_6$ monoethylenisch ungesättigten Mono- oder Dicarbonsäure mit einem $C_1$-$C_{18}$-Hydroxyalkanol oder -Diol oder N-Monooder N,

N-Di-$C_1$-$C_{18}$-Alkylamid, die Divinylester einer $C_1$-$C_{18}$ aliphatischen oder aromatischen Dicarbonsäure, die N,N-Diacryloyl- oder N,N-Dimethacryloylderivate von $C_1$-$C_{18}$-aliphatischen oder aromatischen Diaminen, gegebenenfalls in ihrer enantiomerenreinen Form, die Divinylester der Weinsäure, und substituierter Weinsäure, die N,N'-Diacrylamide von 1,2-Diphenylethylendiamin in enantiomerenreiner Form oder als Diastereomere, Divinylethylenharnstoff und seine Derivate, Divinylbenzol oder siliciumhaltige Vernetzungsmittel und dergleichen verwendet werden. Die Art und Menge der Vernetzungsmittel bestimmen wesentlich den Vernetzungsgrad und die Art der hieraus resultierenden Porosität. Es können sowohl quervernetzte quellungsporöse Gele als auch permanent poröse Materialien mit einem weiten Porenbereich von 0-500 nm, bevorzugt permanentporöse Materialien mit einer oberen Ausschlußgrenze für lineare Polystyrole mit einem Knäueldurchmesser von 5-100 nm dargestellt werden.

Weitere Monomere und Vernetzungsmittel und deren Anwendung sind dem Fachmann in großer Zahl bekannt.

Als übliche Regler zur Molekulargewichtskontrolle können beispielsweise Mercaptoverbindungen, wie Mercaptoethanol, Mercaptopropanol, Mercaptobutanol, Mercaptoessigsäure, Mercaptopropionsäure, Mercaptotrimethoxysilan, Butylmercaptan oder t-Dodecylmercaptan oder auch organische Halogenverbindungen, wie Tetrachlorkohlenstoff oder Bromtrichlormethan mit einem Anteil von 0,01 bis 5 Gew.-% bezogen auf die Monomermenge eingesetzt werden.

Als radikalische Polymerisationsinitiatoren kommen alle Stoffe in Betracht, die in der Lage sind, radikalische Polymerisationen auszulösen. Typische radikalische Polymerisationsinitiatoren sind sowohl Alkalimetallperoxodisulfate, Peroxide, wie sie beispielsweise in Kunststoffe 80, S. 830-837, 1990 beschrieben werden, als auch Azoverbindungen. Genauso eignen sich für eine erfindungsgemäße Polymerisation Initiatoren, die aus mindestens einem organischen oder anorganischen Oxidationsmittel, bevorzugt einem Peroxid und/oder Hydroperoxid, und mindestens einem organischen oder anorganischen Reduktionsmittel zusammengesetzt sind. Üblicherweise beträgt die Menge an Initiator zwischen 0,01 und 5 Gew.-%, bevorzugt 0,1 bis 2 Gew.-% der gesamten Monomermenge.

in besonders bevorzugten Ausführungsformen der erfindungsgemäßen Polymerisation ist der Zusatz von Emulgatoren oder Schutzkolloiden nicht notwendig. Hiermit wird eine wesentliche Hürde bei der Herstellung von dispersen Emulsions- oder Suspensionspolymerisaten beseitigt, da aufwendige und kostenintensive Reinigungsschritte zur Entfernung der Emulgatoren vollständig entfallen. Besonders bevorzugt ist daher die Reaktionsführung ohne Einsatz von Emulgatoren oder Schutzkolloiden bei der Herstellung von homogen und heterogen quervernetzten Styrol/Divinylbenzolen, homogen und heterogen quervernetzten Vinylacetat/Divinyladipinsäure-Trägern, homogen und heterogen vernetzten Vinylacetat/Divinylethylenharnstoff-Trägern, homogen und heterogen vernetztem Vinylacetat/N,N'-Ethylenbisacrylamid, Kieselgelen, Titanoxid, Zirkonoxid und Aluminiumoxid-Teilchen, sowie porösen Teilchen aus den tri-substituierten Alkyl-, Alkylaryl- und Arylcarbonsäureestern von Kohlenhydraten, dabei vor allem der entsprechenden Cellulose- und Amylosederivate; sowie von dreifach substituierten Alkyl-, Alkylaryl- und Arylcarbamaten von Polysacchariden, besonders Cellulose- und Amylosetris(3,5-Dimethylphenylcarbamat).

Sollten dennoch in einigen Fällen Emulgatoren oder Schutzkolloide zugesetzt werden, werden üblicherweise Mengen von bis zu 10 Gewichtsprozent, vorzugsweise 0,5-5 Gew.% und besonders bevorzugt 0,5 bis 3 Gew.% bezogen auf die zu polymerisierenden Monomere eingesetzt. Geeignete Schutzkolloide sind beispielsweise Polyvinylalkohole, Cellulosederivate, Polyalkohole, Cellulosederivate oder Copolymere auf Basis von Vinylpyrrolidon. Geeignete Emulgatoren sind insbesondere anionische und nicht-ionische Emulgatoren, wie ethoxilierte Mono-, Di- und Trialkylphenole, Ethoxylate langkettiger Alkohole, Alkali- und Ammoniumsalze von Alkylsulphonsäuren und von Alkylarylsulphonsäuren. Eine ausführliche Beschreibung findet sich in Houben-Weyl, Methoden der Organischen Chemie, Georg-Thieme Verlag, Band XIV/1, 192-208 oder 411-420, 1961.

Bei der Herstellung poröser Polymerteilchen durch Emulsionspolymerisation kann die Porenbildung durch geeignete Fällungsmittel beeinflußt werden. Typische Fällungsmittel sind Alkylverbindungen oder Alkylalkohole mit 6 bis 30 Kohlenstoffatomen, bevorzugt 6-12 Kohlenstoffatomen.

Als anorganische Monomere für die Polykondensationen und Polyadditionen sind besonders die Ester, Carbide, Nitride und Alkylverbindungen der Übergangsmetalle der 3., 4. und 5. Haupt- und Nebengruppe zu erwähnen. Bevorzugt sind die Alkyl-, Aryl- und Polyester des Aluminiums, Bors, Siliciums, Titans und Zirkons. Besonders bevorzugt sind die $C_1$-$C_{10}$ Ester und substituierten Ester und Polyester von Silicium, Titan, Zirkon, Aluminium und Bor sowie Alkoxyalkyldisilane.

Bei der Herstellung unporöser und/oder poröser anorganischer Oxide, Carboxicarbide und Nitride kommen bevorzugt die genannten Monomere und deren prekondensierten Kondensationsprodukte mit einem Elementgehalt zwischen 15 und 70 Gewichtsprozent zum Einsatz. Bevorzugte Beispiele für solche Ausgangsverbindungen sind Tetraethoxysilan, Polyethoxysilan, z.B. PES® 28 oder PES® 40 der Firma Wacker, Burghausen, Tetraethoxytitanat etc.

Für die erfindungsgemäße Darstellung poröser oder unporöser Kieselgele werden typischerweise Tetraalkoxysilane, d.h. alle hydrolysierbaren Kieselsäureorthoester aliphatischer Alkohole, wie beispielsweise die Ester aliphatischer Alkohole mit 1-10 C-Atomen, z.B. Methanol, Ethanol, n- oder i-Propanol, sowie der isomeren Butanole und Pentanole, verwendet. Diese können einzeln oder im Gemisch eingesetzt werden. Bevorzugt sind die Kieselsäureor-

thoester der $C_1$-$C_3$-Alkohole, insbesondere Tetraethoxysilan. Zur Erzeugung von porösen Partikeln können zusätzlich Trialkoxysilane der Formel I verwendet werden.

$$(R^1\text{-}O)_3Si\text{-}R^2 \hspace{8cm} I$$

worin

R$^1$     $C_1$-$C_{10}$-Alkyl

R$^2$     $C_5$-$C_{25}$-Alkyl, $C_6$-$C_{14}$-Aryl, $C_7$-$C_{25}$-Alkylaryl, $C_7$-$C_{25}$-Arylalkyl,

Bevorzugterweise ist $R^2$ $C_6$-$C_{20}$-n-Alkyl.

Bevorzugt werden die Tetraalkoxysilane im 3- bis 250-fachen molaren Überschuß bezogen auf die Silane der Formel I eingesetzt.

Nähere Angaben, insbesondere darüber wie die primär erzeugten Poren erweitert werden können, finden sich in WO 97/07056 und der dort zitierten Literatur.

Insbesondere für die Chromatographie werden die Oberflächen der $SiO_2$-Partikel häufig derivatisiert, damit sie sich für verschiedene Trennverfahren eignen. Dabei werden beispielsweise Vinylgruppen, 2,3-Dihydroxypropylgruppen, 3-Aminopropylgruppen oder Octadecylgruppen eingeführt. Geeignete Silane für diese Reaktionen und Verfahren zur Derivatisierung der $SiO_2$-Oberfläche sind dem Fachmann bekannt und in gängigen Handbüchern, z.B. Porous Silica (K.K. Unger, Elsevier, 1979) zusammengestellt.

Als Alkoholkomponente sind aliphatische $C_1$-$C_5$-Alkohole, bevorzugt $C_1$-$C_3$-Alkohole wie Methanol, Ethanol sowie i-Propanol oder n-Propanol geeignet. Diese können einzeln aber auch im Gemisch miteinander verwendet werden.

Zur Polymerisation hat es sich als besonders zweckmäßig erwiesen, bei einer Reaktionstemperatur von 5-250 °C, insbesondere bei 5-150°C, bevorzugt bei 30-150 °C und besonders bevorzugt bei 50-100 °C zu arbeiten. Für die Polykondensation liegt der bevorzugte Temperaturbereich zwischen 0 und 30 °C. Die Polymerisation kann bei Normaldruck oder unter erhöhtem Druck durchgeführt werden.

Die Durchführung der Reaktionen erfolgt bevorzugt derart, daß der Mikromischer mit kontinuierlicher Phase, in der Regel Wasser oder Wasser/Alkohol oder Wasser/organisches Lösungsmittel kontinuierlich mit definiertem Volumenstrom durchströmt wird. Alkohole sind in diesem Fall mit Wasser mischbare Alkohole, wie Methanol, Ethanol, Propanol etc.; auch die organischen Lösungsmittel sollten mit Wasser mischbar sein. Dies sind beispielsweise Dimethylsulfoxid, N,N-Dimethylformamid, N-Methylpyrrolidon, Tetrahydrofuran, Acetonitril und Dioxan. Anschließend wird die heterogene Phase (typischerweise ein nicht oder nur schlecht mit Wasser mischbarer Alkohol oder Kohlenwasserstoff), die das oder die Monomere sowie optional Hilfsstoffe (z.B. Molekulargewichtsregler, Emulgatoren etc.) enthält, über die zweite Zuführung, ebenfalls mit definiertem, genau eingestelltem Volumenstrom eingespeist. Das Verhältnis der beiden Volumenströme kann in einem breiten Bereich liegen und richtet sich nach der gewünschten Teilchengröße, der Art und Verteilung der Teilchengrößen, der Viskosität der homogenen und heterogenen Phase abhängig von der Reaktionstemperatur sowie der Reaktionskinetik und dem notwendigen Verhältnis der Inertkomponenten in der Endmischung zur Erzielung einer geeigneten Porenstruktur. Vorzugsweise liegt das Volumenstromverhältnis zwischen kontinuierlicher und heterogener Phase (kontinuierlich : heterogen) bei 1:10 bis 100:1, insbesondere bei 5:1 bis 20:1.

Ebenso ist es möglich, die oben beschriebene Vorgehensweise umzukehren. Beispielsweise zur Polymerisation von hydrophilen Monomeren werden diese über die wässrige Phase zugeführt. Ein Beispiel dafür ist ein Verfahren zur Herstellung von Kieselgelen, wobei Emulsionen von Wasserglas in Wasser / Heptan oder anderen nichtmischbaren Lösungsmitteln in saurer Lösung kondensiert werden. Dieses Verfahren ist besonders geeignet zur kostengünstigen Herstellung von Kieselgelpartikeln, die Verunreinigungen mit z.B. Alkalisalzen aufweisen dürfen.

Das in der wässrigen Phase enthaltene Monomer ist beispielsweise eine wässrige Kieselsäurelösung (Wasserglas). Auch andere geeignete anorganische Verbindungen, wie Titanate, Aluminate oder Zirkonate können als Monomere in der wässrigen Phase vorliegen. Durch den Mikromischer wird dann die wässrige Phase mit einer nicht mischbaren zweiten Phase emulgiert. Zumeist wird die zweite Phase durch ein organisches Lösungsmittel, wie geradkettige oder verzweigte $C_5$-$C_{10}$-Alkane oder Mischungen davon gebildet. Auch andere Lösungsmittel sind geeignet. Es muß jedoch bedacht werden, daß das organische Lösungsmittel nachträglich wieder entfernt werden muß. Daher sollte es ausreichend flüchtig sein. Die entstandene Emulsion wird dann in ein Reaktionssystem, welches einen geeigneten, bevorzugt sauren, Katalysator enthält, eingeleitet und geliert. Beispiele für Reaktionsbedingungen finden sich z.B. in Porous Silica (K.K. Unger, Elsevier, 1979).

Für die erfindungsgemäße Polymerisation geeignete Mischer sind statische Mikromischer. In diesen Mischem wird unter Ausnutzung der Strömungsenergie die räumliche Verteilung zweier zu mischender Komponenten durch die Strömungsführung, z.B. durch Trennen und Wiedervereinigen, Verdrehen, Verzerren und Aufweiten so beeinflußt, daß große Grenzflächen für den diffusiven Austausch zwischen den Komponenten entstehen. Verschiedene Mischer und ihr Aufbau sind bekannt. Beispielsweise sind solche Systeme beschrieben in Phtt. Gravesen et al., Proceedings of IEEE MEMS'96, 1996, San Diego; V. Hessel et al., Proc. Int. Symp. On Microsystems, Intelligent Materials and Robots, Sendai, Japan, 1995, 45; Schwesinger et al., J. Micormech. Microeng. 1996, 6, 99; R.W. Wegeng et al., Proceedings of 1996 Spring National Meeting AIChE, New Orleans, 1996, 1; A.E. Gruber et al., "IR-spectroscopic Studies of a Chemical Reaction in Various Mikromixer designs", Second Int. Conf. On Mikroreaction Technology, New Orleans, USA, 8.-12. März, 1998 oder in H. Löwe et al., "Mikromixing Technology" schriftliche Zusammenstellung zur Präsentation auf der IMRET 4, 4th International Conference on Mikroreaction Technology, Atlanta, 5.-9. März 2000.

Besonders bevorzugt zur Darstellung der erfindungsgemäßen Perlpolymerisate ist das LIGA Mikromixing System (Mikromixer) von IMM (Institut für Mikrotechnik Mainz GmbH). In diesem Hochleistungsmischer werden zwei Flüssigkeitsströme in einer Mischeinheit in speziell geformten Mikrokanälen gegeneinander geführt und anschließend senkrecht zur Stromrichtung durch einen Spalt ausgeführt. Die Wände der Mikrokanäle sind zur Vergrößerung der Berührungsfläche der beiden Ströme sinusoidal gewunden. Durch diesen Aufbau werden zwei Flüssigkeitsströme oder Flüssigkeits- und Gasströme innerhalb von Sekunden bis hin zu Millisekunden durch Diffusion gemischt. Diese Mischer sind in verschiedenen Ausführungsformen erhältlich, so daß je nach Syntheseanforderung ein Mischer ausgewählt werden kann.

Je nach Applikation, beispielsweise bei dem Einsatz höher viskoser Lösungen, können jedoch auch andere Mischertypen von Vorteil sein.

Für technische Anwendungen, bei denen eine Massenproduktion angestrebt sind, sind insbesondere Raupen- oder Zwiebelmischer geeignet, wie sie beispielsweise von der Firma IMM (Institut für Mikrotechnik Mainz GmbH, Deutschland) erhältlich sind. Der Raupenmischer weist z.B. im Unterschied zu dem LIGA Mikromixing System insgesamt nur zwei Kanäle auf. Durch die Konstruktion des Mischers kann eine wesentlich höhere Fließgeschwindigkeit erzielt werden. Zudem ist die Reinigung der Kanäle vereinfacht. Ein Zwiebelmischer besitzt einen schalenförmigen Kanalaufbau. Auch hier besteht der Vorteil der höheren Produktivität und besseren Reinigungsmöglichkeit.

Bei der erfindungsgemäßen Darstellung von Perlpolymerisaten werden zwei oder mehrere flüssige Ströme geeigneter nicht oder wenig mischbarer Komponentenlösungen in dem Mischer dispergiert und anschließend zur Polymerisation gebracht. Dabei bilden sich durch die hohen Scherkräfte Tröpfchen mit relativ enger Teilchengrößenverteilung. Dadurch entfällt erstmals die Notwendigkeit, bei der Darstellung von Perlpolymerisaten Emulgatoren zuzusetzen oder die Perlpolymerisate nachträglich bezüglich ihrer Korngrößenverteilung zu klassieren.

Die Größe der entstehenden Teilchen läßt sich zum einen durch Variation der Kanalgrößen beeinflussen und zum anderen durch die Flußgeschwindigkeiten der Teilströme. Je kleiner die Kanalgröße und je größer die Flußgeschwindigkeit, desto kleiner sind die entstehenden Partikel. Auf diese Weise können erfindungsgemäß Partikel mit gezielt einstellbaren engen Korngrößen zwischen 0,1 und 300 μm, bevorzugt zwischen 1 und 100 μm, besonders bevorzugt zwischen 1 und 20 μm hergestellt werden. Besonders vorteilhaft ist das Verfahren zur Herstellung von Partikeln mit einer engen Korngrößen zwischen 5 und 50 μm, insbesondere zwischen 10 und 50 μm, da Partikel in diesen Größenbereichen bislang nur mit einer sehr weiten Korngrößenverteilung hergestellt werden können.

Ein weiterer wichtiger Reaktionsparameter ist die Viskosität. Je höher viskos die heterogene Phase, desto mehr Scherkräfte müssen aufgewendet werden, um eine bestimmte niedrige Teilchengröße zu erzielen.

Zur Erzeugung bestimmter Porenstrukturen bei der erfindungsgemäßen Polymerisation können die aus den Batch-Verfahren bekannten Reaktionsbedingungen direkt übertragen werden. Beispiele für Reaktionsbedingungen finden sich z.B. in Porous Silica (K.K. Unger, Elsevier, 1979).

Zusätzlich wurde gefunden, daß bei der erfindungsgemäßen Darstellung von Kieselgelen durch Variation der Ammoniak-Konzentration in der Vorlagelösung (z.B. Lösung 3, Beispiel 2) direkter Einfluß auf das Porenvolumen der Partikel genommen werden kann. Beispielsweise kann mit Ammoniak-Konzentrationen, die doppelt so hoch liegen wie die üblicherweise in Batch-Verfahren eingesetzten Konzentrationen, das Porenvolumen auf einen Bereich zwischen 0,7 und 0,9 eingestellt werden.

Dadurch werden die mechanischen Eigenschaften des erfindungsgemäß produzierten Kieselgels im Vergleich zu herkömmlich produzierten Kieselgelen stark verbessert. Gleichzeitig bleiben die für die chromatographischen Eigenschaften wichtigen Parameter der Oberfläche und Porengröße nahezu unverändert.

Die Einstellung der Teilströme und somit die mit der Mischung der Komponenten zusammenhängenden Parameter kann mittels marktüblicher Dosierpumpen erfolgen.

Für die erfindungsgemäße Perlpolymerisation können dem Mikromischer Zusatzeinrichtungen zugefügt werden. Dies können erfindungsgemäß ein oder mehrere parallel und/oder seriell vor- oder nachgeschaltete weitere Mikromischer, Verweilerschleifen bzw. Rohrreaktoren, Wärmetauscher, Reaktionsgefäße, Vorrichtungen zum Einspeisen weiterer Flüssigkeiten oder Gase sowie Einrichtungen zur Probenentnahme oder Detektion sein. Vorzugsweise ist der Mikromischer mit einer vor- oder nachgeschalteten Verweilerschleife und einem Wärmetauscher versehen, so daß die Zuführung der Lösungen zum Mischer und die Temperatur sowie die Reaktion nach der Teilchenbildung sehr genau gesteuert und kontrolliert werden können.

Bevorzugt insbesondere für die Herstellung größerer Partikel ist auch ein dem Mikromischer nachgeschaltetes Reaktionsgefäß. Auf diese Weise wird die Beschränkung der erzielbaren Partikelgröße, wie sie beispielsweise bei DE 196 34 450 durch den Durchflußreaktor gegeben ist, vermieden.

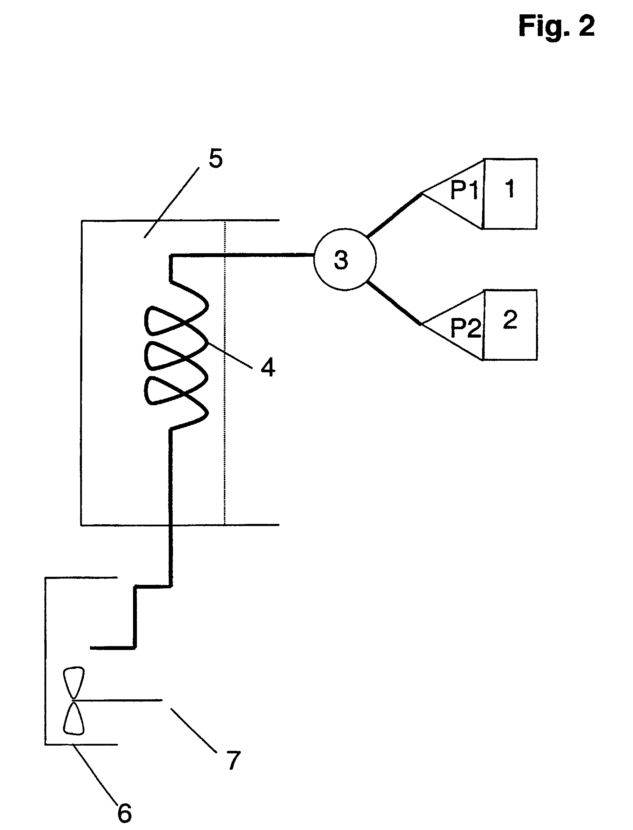

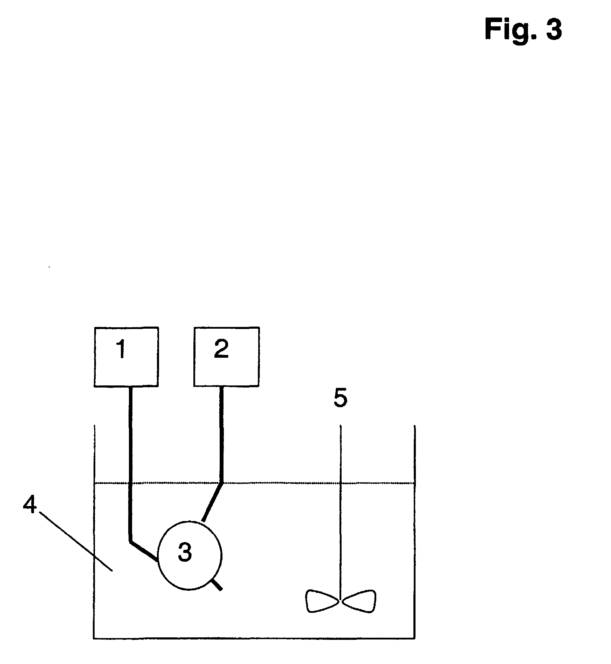

Das erfindungsgemäße Verfahren ist universell anwendbar für jede Art der Polymerisation, bei der aus vorgebildeten kugelförmigen Tröpfchen Polymere gebildet werden. Nach Bildung der kugelförmigen Partikel mithilfe des Mikromischers können sich daher verschiedenste Zusatzeinrichtungen oder Reaktoren anschließen, die für die entsprechende Polymerisation geeignet sind. Auf diese Weise bietet das erfindungsgemäße Verfahren die Möglichkeit, die Perlpolymerisation aus dem schwer zu beherrschenden Batch-Betrieb in ein kontinuierliches Verfahren zu überführen. Die notwendigen Apparaturen sind wesentlich kleiner; durch gezielte Verfahrensführung entstehen weniger zu entsorgende Nebenprodukte. Bereits nach kurzer Optimierung der Reaktionsbedingungen entstehen Kornbandbereiche, bei denen eine Siebung, Sichtung oder Sedimentation für die meisten Anwendungen nicht mehr notwendig ist. Im Vergleich dazu entstehen bei der Rührkesselmethode wie in Abb. 2 und 3 gezeigt so breite Kornbänder, daß zum Erhalt einer engen Komgrößenverteilung nach Siebung und/oder Sedimentation nur noch eine Ausbeute von ca. 30 Gew.% verbleibt. Nach dem erfindungsgemäßen Verfahren ist die Ausbeute an gesuchten Kornbändern nahezu 100%.

Somit sind die nach dem erfindungsgemäßen Verfahren hergestellten Partikel sehr gut für alle bekannten Anwendungen von monodispersen Partikeln einsetzbar. Insbesondere sind sie für Anwendungen im Bereich der Chromatographie, wie z.B. HPLC oder Kapillarelektrophorese geeignet. Anorganische Teilchen, vor allem Kieselgel-Partikel mit der erfindungsgemäß engen Korngrößenverteilung, sind ideal als Zuschlagstoffe für kosmetische Cremes und ähnliches. Auch als Abstandshalter oder Eichsubstanzen sind die erfindungsgemäß hergestellten Partikel geeignet.

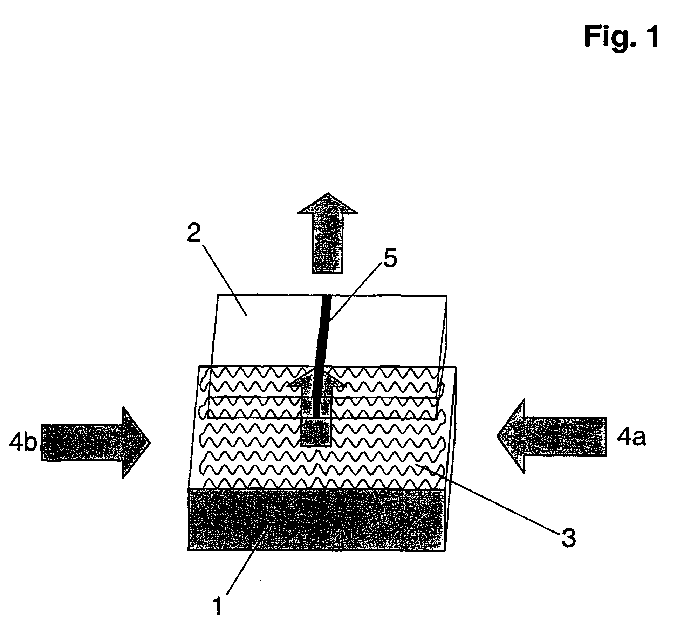

In Abbildung 1 ist schematisch der Aufbau eines Mikromischers der Firma IMM dargestellt. Die Vorrichtung besteht aus einer Bodenplatte (1) und einer Abdeckplatte (2), die mit den Ein- und Auslässen verbunden sind. Das Mischelement enthält eine Lage von 15 oder 18 sinusoidal geformten Kanälen (3) mit einer Weite von 25 oder 40 μm. Beim Eintritt der beiden Komponentenströme (4a und 4b) in die Mischeinheit werden diese in kleinere Teilströme unterteilt, die sich durch die Kanalstruktur nicht sofort treffen, sich jedoch in der Mitte der Einheit durchdringen (Multilamination).

Die Kontaktfläche wird begrenzt durch einen Schlitz (5) auf der Oberseite der Mischeinheit, durch den das Gemisch aus dem Mischer austritt.

Neben einer einzelnen Mischeinheit kann für einen größeren Durchsatz auch ein Mikromixer Array beispielsweise bestehend aus 10 Mischer-Untereinheiten verwendet werden. Diese Anordnung fällt erfindungsgemäß unter den Begriff Mikromischer.

Abb. 2 und 3 werden in Beispiel 1 und 2 näher erläutert.

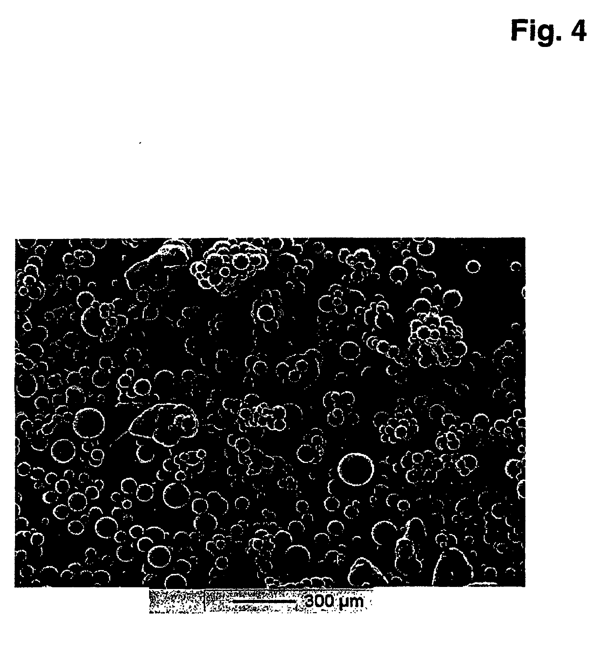

Abb. 4 zeigt ein typisches Ergebnis einer Polymerisation, die in einem konventionellen Rührkesselreaktor durchgeführt wurde. Es sind sowohl große wie auch sehr viele kleine Teilchen enthalten.

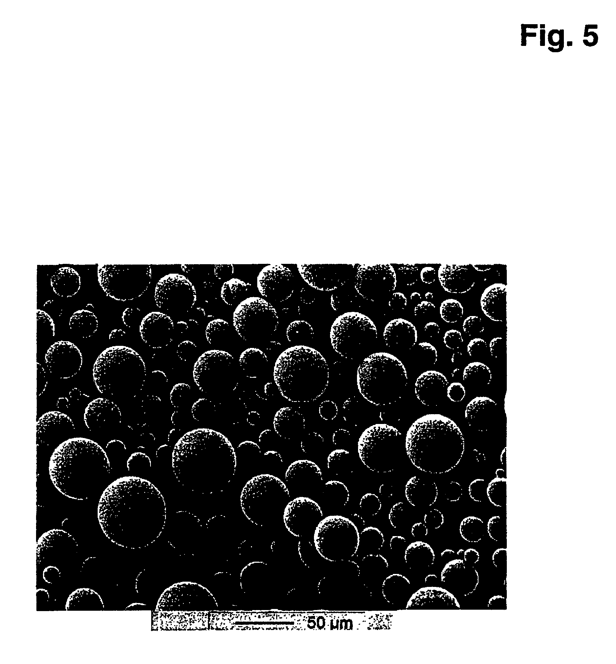

Abb. 5 zeigt Polymerisationsprodukte mit gleicher chemischer Zusammensetzung wie die Teilchen aus Abb. 2., die wiederum aus herkömmlichen Rührkesselansätzen stammen. Diese Teilchengrößenverteilung wurde nach Siebung und zweifacher Sedimentation zur Feinanteilentfernung erhalten.

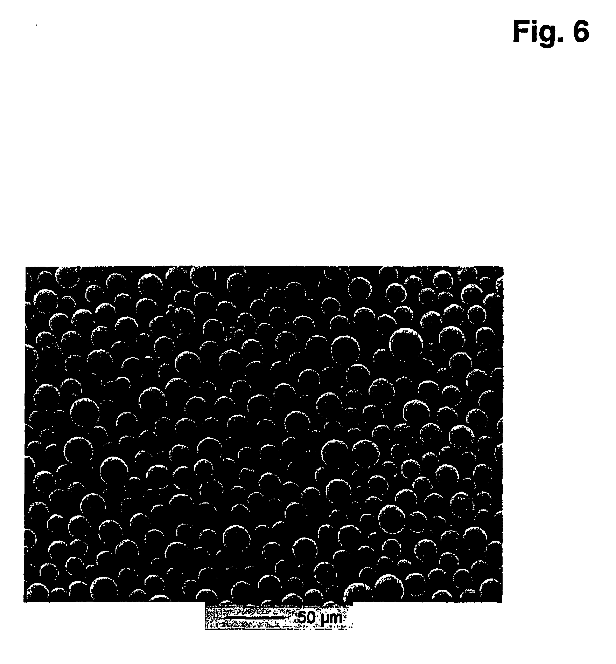

Abb. 6 zeigt das Ergebnis einer erfindungsgemäß durchgeführten Polymerisation. Die deutlich erkennbare sehr enge Teilchengrößenverteilung wurde direkt und ohne weitere Klassierung erhalten.

Auch ohne weitere Ausführungen wird davon ausgegangen, daß ein Fachmann die obige Beschreibung im weitesten Umfang nutzen kann. Die bevorzugten Ausführungsformen und Beispiele sind deswegen lediglich als beschreibende, keineswegs als in irgendeiner Weise limitierende Offenbarung aufzufassen.

**Beispiele**

Alle Synthesen wurden mit dem Mikomischer, Kanalbreite 40 μm, (Typ A7) der Firma IMM durchgeführt.

**1. Beispiel Herstellung eines heterogenen quervernetzten Styrol-Divinylbenzols**

Versuchsaufbau:

Die Apparatur entspricht dem Aufbau gemäß Abb. 2, zusammengestellt aus den Vorratsbehältern (1) und (2) für die homogene und heterogene Phase, zwei flußkonstante Kolbenförderpumpen P1 und P2, dem Hochleistungsmischer (3) sowie einem Rohrreaktor (4) als Nachreaktionsstrecke, zusammengestellt aus drei Abschnitten mit unterschiedlichem Innendurchmesser (Abschnitt a: 2 mm i.d., Länge 10 m; Abschnitt b: 5 mm i.d., Länge 10 m; Abschnitt c: 10 mm i.d., Länge 10 m). Der Rohrreaktor ist absteigend angeordnet und mündet in ein Rührgefäß (6) mit Rührer (7). Er kann durch einen Thermostaten (5) auf Reaktionstemperatur oberhalb der Initiatortemperatur (typischerweise > 65°C) eingestellt werden.

Der Mischer ist zu Reaktionsbeginn immer mit homogener Phase gefüllt. Die Pumpen P1 und P2 werden immer in der Reihenfolge der Förderung homogener Phase vor heterogener Phase in Betrieb genommen.

Versuchsdurchführung:

Herstellung eines Materials mit 10 nm Porengröße und einer mittleren Teilchengröße zwischen 20 - 40 μm.

Die Vorratsbehälter (1) und (2), jeweils gefüllt mit der heterogenen Phase (Reaktionsmischung aus Monomer, Vemetzer, Radikalstarter) und homogenen Phase (Wasser und optional Emulgator) werden auf 40°C Ausgangstemperatur temperiert und mit konstantem Fluß (1 : 10, v/v) in den Mischer (3) dosiert. Die Nachreaktionsstrecke (4) wird auf 85 °C erwärmt. Am Ende des Rohrreaktors (4) befindet sich ein Rührgefäß (10 L) (6) welches mittels eines Blattrührers (7) konstant mit kleiner Umdrehungszahl gerührt wird.

Reaktionsansatz:

a) mit Emulgator

Lösung 1:    Styrol
             Divinylbenzol
             0,2 Gew.% Azoisobutyronitril

Styrol und Divinylbenzol werden im Verhältnis 1:1 eingesetzt.

Lösung 2:    Wasser
             0,2 Gew.% Tween 80®

Verhältnis Lösung 1 / Lösung 2 = 1:10

b) ohne Emulgator
Aufbau und Zusammensetzung wie unter a) jedoch ohne Emulgator in Lösung 2

**2. Beispiel Herstellung eines porösen kugelförmigen Kieselgels**

a) Herstellung von Polyethoxysilan
    400 g TES® 40 werden in einen trockenen 2 l Rundkolben gegeben und unter Rühren mit 200 g Ethanol versetzt. Das Gemisch wird 20 min lang auf 25 °C temperiert. Dann werden 0,5 ml Thionylchlorid zugegeben. Anschließend werden 60 g entionisiertes Wasser (25 °C) über 10 bis 12 min zugetropft, dann das Gemisch weitere 30 min gerührt, das Ethanol bei 100 mbar abgezogen, das Wasserbad von 25 °C in 10 °C/30 min Schritten auf 60°C erhitzt, der Druck auf 30 mbar reduziert und das Gemisch eingeengt bis 1,16 g Polyethoxysilan erhalten werden.

b) Darstellung des Kieselgels

Lösung 1:    16,7 g Polyethoxysilan
             6 g Dimethylformamid (99%)

Lösung 2:    Wasser/2-Propanol (64/36, v/v)
Lösung 3:    25% Ammoniak, 1:50 mit Wasser verdünnt

Gesamtvolumenstrom: 20 ml/min;

Verhältnis Lösung 1 / Lösung 2 =    1:15 ⇒ Teilchengröße ca. 5 μm
                                    1:10 ⇒ Teilchengröße ca. 10 μm

Versuchsablauf:

Aus den Vorratsgefäßen (1) und (2) werden die homogene Phase und die heterogene Phase gemäß Vorschrift im vorbestimmten Volumenverhältnis im Mischer (3) zusammengeführt. Der Mischer (3) wird oberhalb des Rührgefäßes (4) (Volumen 10 L) so angeordnet, daß die Suspension in den Trombus der Reaktionsflüssigkeit (Lösung 3) eintropft.

Als Variante des Versuchsaufbaus kann, wie in Abbildung 3 dargestellt, der Mischer (3) in das Reaktionsgefäß (4) eingetaucht werden. Unter stetigem Rühren (5) wird die Reaktionssuspension aus dem Mischer direkt eingespeist.

### 3. Beispiel Herstellung eines kugelförmigen porösen Cellulosederivats

Lösung 1:    12 g Cellulosetribenzoat
             150 ml Dichlormethan
Lösung 2:    Wasser
Lösung 3:    Wasser
Lösung 4:    Methanol

Gesamtvolumenstrom (Lösung 1 und 2):    11 ml/min;
Volumenstrom (Lösung 3):                ca. 100 ml/min
Verhältnis Lösung 1 / Lösung 2 =        1:10

Um die vorzeitige Fällung des Celluloseesters aus der Celluloseester-Dichlormethan-Suspension beim Erstkontakt mit der Fällungsflüssigkeit Methanol (Lösung 4) zu verhindern, wird der Auslaß des Mischers nicht direkt in die Fällungsflüssigkeit geleitet. Der Ausgang des Mischers wird mit einem Rohr konzentrisch umhüllt (Rohr in Rohr ), aus dem über eine dritte Reaktionspumpe Wasser (Lösung 3) mit sehr viel größerem Volumenstrom gepumpt wird. Durch diese den Austrittsschlauch konzentrisch umhüllenden Flüssigkeitsführung wird die Konzentration der Celluloseester-Dichlormethan-Suspension in Wasser um mindestens das Zehnfache verringert. Diese verdünnte Suspension wird dann in die Fällungsflüssigkeit Methanol eingeleitet. Damit die Methanolkonzentration der Fällungslösung erhalten bleibt, wird die Reaktionsmischung mit konstantem Förderverhältnis durch die Fällungsflüssigkeit ersetzt.

**Patentansprüche**

1. Verfahren zur Darstellung von porösen oder unporösen Perlpolymerisaten, wobei mindestens zwei nicht oder gering miteinander mischbare flüssige Ströme von Komponentenlösungen gemischt werden, **dadurch gekennzeichnet, daß** besagte Komponenten in einem statischen Mikromischer dispergiert und direkt im Mikromischer und/oder nach Austritt aus dem Mikromischer zur Reaktion gebracht werden.

2. Verfahren nach Anspruch 1 **dadurch gekennzeichnet, daß** ein oder mehrere gleichartige und/oder verschiedene Zusatzeinrichtungen dem Mikromischer vor- und/oder nachgeschaltet sind.

3. Verfahren nach einem der Ansprüche 1-2, **dadurch gekennzeichnet, daß** die Komponentenlösungen weder Emulgatoren noch Schutzkolloide enthalten.

**Claims**

1. Process for preparing porous or nonporous bead polymers, in which at least two immiscible or slightly miscible liquid streams of component solutions are mixed, **characterized in that** the said components are dispersed in a static micromixer and are reacted directly in the micromixer and/or after leaving the micromixer.

2. Process according to Claim 1, **characterized in that** one or more similar and/or different ancillary devices are installed upstream and/or downstream of the micromixer.

3. Process according to either of Claims 1-2, **characterized in that** the component solutions contain neither emulsifiers nor protective colloids.

**Revendications**

1. Procédé pour la préparation de polymérisats en perles poreux ou non poreux, dans lequel au moins deux courants liquides non ou faiblement miscibles entre eux de solutions de composants sont mélangés, **caractérisé en ce que** lesdits composants sont dispersés dans un micro mélangeur statique et sont mis à réagir directement dans le micro mélangeur et/ou après la sortie du micro mélangeur.

2. Procédé selon la revendication 1, **caractérisé en ce que** l'on intercale et/ou place à la suite du micro mélangeur un ou plusieurs dispositifs supplémentaires identiques ou différents.

3. Procédé selon la revendication 1 ou 2, **caractérisé en ce que** les solutions de composants ne contiennent ni émulsifiant ni de colloïdes protecteurs.

**Fig. 1**

**Fig. 2**

**Fig. 3**

**Fig. 4**

300 µm

**Fig. 5**

**Fig. 6**

50 µm